# FASCICULE DE BREVET EUROPEEN

(11) **EP 3 163 732 B1**
(45) Date de publication et mention de la délivrance du brevet: **21.07.2021**
(21) Numéro de dépôt: 15306722.8
(22) Date de dépôt: 28.10.2015
(51) Int. Cl.: H02M 1/12, H02M 7/493, H02M 7/5387, H02M 1/00

(54) **SYSTÈME DE CONVERSION DE PUISSANCE BIDIRECTIONNEL POUR CHARGE ÉLECTRIQUE MONOPHASÉE ET PROCÉDÉ DE CONVERSION DE PUISSANCE CORRESPONDANT**
BIDIREKTIONELLES LEISTUNGSWANDLUNGSSYSTEM FÜR EINPHASIGE ELEKTRISCHE LADUNG, UND ENTSPRECHENDES LEISTUNGSWANDLUNGSVERFAHREN
BIDIRECTIONAL POWER CONVERSION SYSTEM FOR SINGLE-PHASE ELECTRICAL LOAD AND CORRESPONDING POWER CONVERSION METHOD

(43) Date de publication de la demande: 03.05.2017
(73) Titulaire: GE Energy Power Conversion Technology Limited, Rugby Warwickshire CV21 1BU (GB)
(72) Inventeur: LAPASSAT, Nicolas, 91345 MASSY (FR)
(74) Mandataire: Casalonga

(56) Documents cités:
- WO-A1-02/17469
- US-A- 6 101 109
- US-A1- 2009 116 266
- US-A1- 2010 165 678
- US-A1- 2015 062 984
- US-A1- 2015 270 789
- None

## Description

La présente invention concerne, de manière générale, les convertisseurs de puissance et se rapporte en particulier à un système de conversion de puissance bidirectionnel pour charge électrique monophasée.

Plus particulièrement, la présente invention se rapporte à un système de conversion de puissance destiné à être raccordé à un bus d'alimentation continue et destiné à délivrer une puissance alternative à une charge monophasée tout en assurant une régulation de tension à haute fréquence, c'est-à-dire une fréquence d'au moins 1000 Hertz ou, de manière générale, à une fréquence d'au moins un tiers de la fréquence de découpage du système de conversion de puissance.

Il s'agit en particulier de délivrer à une charge monophasée une tension alternative monophasée à haute fréquence, dont le rapport entre la tension et la fréquence est constant, tout en assurant un transfert bidirectionnel de puissance, et ce pour des puissances supérieures à 500kW.

La tension alternative est ici une tension en créneau ou sensiblement en créneau. Il peut s'agir d'une tension trapézoïdale ou en créneau, avec des transitions centrée à 0V.

Le système de conversion de puissance peut être par exemple un convertisseur de puissance pour machine électrique, tel qu'un dispositif de stockage d'énergie électrique, ou un convertisseur DC/DC, tel qu'un convertisseur DAB (pour « Dual active Bridge », en anglais).

On connait le document US 2015/062984 qui décrit un circuit de conversion de puissance pouvant être employé en circuit redresseur ou en circuit inverseur. Le circuit de conversion de puissance comprend des bras de ponts à plusieurs niveaux, connectés en parallèle et fonctionnant de manière entrelacée.

On pourra à cet égard se référer au document US 5 355,294, qui décrit un système de conversion de type DAB, comprenant un redresseur d'entrée raccordé à un bus d'alimentation dans lequel circule un courant alternatif, un convertisseur d'entrée DC/DC délivrant un premier niveau de tension et un convertisseur de sortie délivrant un deuxième niveau de tension et raccordé au convertisseur d'entrée par un transformateur.

Un tel système est destiné à délivrer deux tensions alternatives en créneau qui sont déphasées l'une par rapport à l'autre.

Selon une application, ce type de système de conversion peut être utilisé pour commander le sens du transfert de puissance entre le convertisseur et une charge en fonction du déphasage entre les deux tensions.

Toutefois, ce type de système de conversion nécessite d'utiliser deux convertisseurs, à savoir le convertisseur d'entrée et le convertisseur de sortie. Or, les convertisseurs présentent un encombrement relativement important ce qui rend contraignant l'usage de ce type de convertisseur. En outre, la présence de deux convertisseurs rend le système de conversion de puissance relativement onéreux.

On pourra également se référer au document EP-A-2 006 993 qui décrit un convertisseur bidirectionnel à pont en H comprenant plusieurs ponts redondants et dans lequel chaque pont peut fonctionner à des tensions de bus d'alimentation différentes pour rendre maximale la puissance de sortie. Lors du fonctionnement normal du convertisseur, une tension à sept niveaux de tension différents est fournie en sortie du convertisseur de manière à simuler une tension de sortie sinusoïdale.

Lorsqu'un pont est défaillant, les autres ponts fonctionnent de manière triphasée, en fournissant une sortie à cinq niveaux de tension.

Le document US 6,005,788 décrit quant à lui un convertisseur de puissance multiniveaux pour application à haute tension et à haute puissance comprenant plusieurs onduleurs connectés en série et ayant des bus d'alimentation DC dédiés pour fournir des formes d'ondes multiniveaux. Ce convertisseur nécessite donc de prévoir plusieurs bus d'alimentation.

Le document US 3,581,212 décrit un circuit de conversion de puissance à réponse rapide comprenant plusieurs onduleurs ayant chacun deux niveaux de sortie opposés connectés en série ou en parallèle et commandés sélectivement pour produire une sortie composite.

Lorsque l'on utilise des tensions en créneau déphasées, comme dans les convertisseurs DAB, les niveaux de tension doivent être conservés à un niveau de tension nominal, au rapport de transformation près. Si tel n'est pas le cas, des fluctuations apparaissent dans le courant fourni à la charge. De telles fluctuations peuvent être très importantes si l'écart de tension devient important.

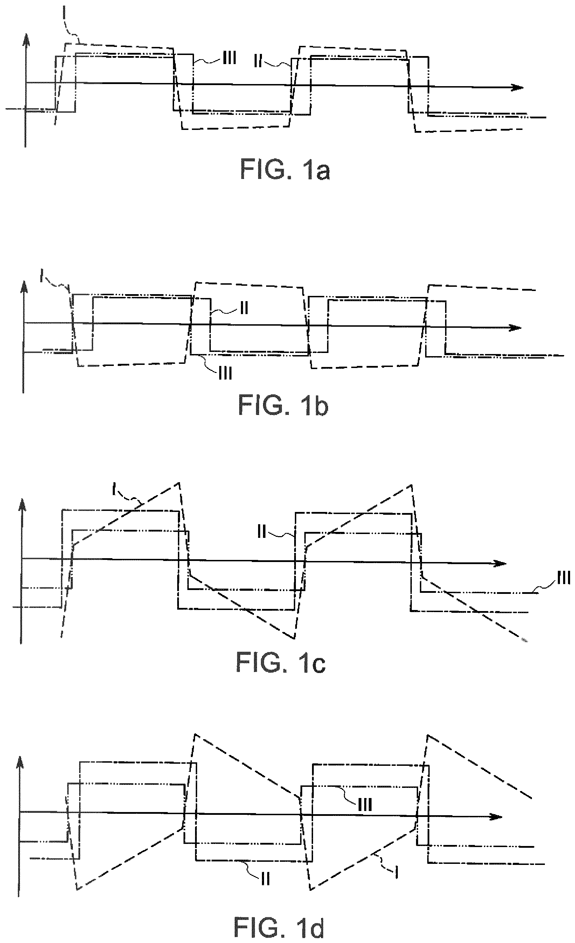

On pourra se référer aux figures 1a, 1b, 1e et 1d qui illustrent l'évolution du courant circulant entre la charge et le convertisseur (courbe I), de la tension de sortie du convertisseur (courbe II) et de la tension de la charge (courbe III), en cas de faible différence de tension (figures la et 1b) et en cas de différence de tension élevée (figures 1c et 1d), tant lors d'un transfert de puissance du convertisseur vers la charge (figures 1a et 1e) que lors d'un transfert de puissance de la charge vers le convertisseur (figures 1b et 1d).

Comme on le voit sur les figures 1a et 1b, une fluctuation de courant (courbe I) apparaît même en cas de faible différence de tension entre la tension délivrée par le convertisseur (courbe II) et la tension de la charge (courbe III). Ces fluctuations de tension peuvent être importantes lorsque la différence de tension croît (figures 1c et 1d).

Pour des applications embarquées à bord de véhicules automobiles à traction au moins partiellement électrique, dans lesquelles on met en œuvre un transfert de puissance bidirectionnel entre les batteries de traction du véhicule et une roue à inertie, les fluctuations de courant sont éliminées en utilisant un hacheur bidirectionnel placé entre des étages de conversion. Toutefois, ce hacheur constitue également un étage de conversion supplémentaire qui augmente le volume et le coût du système de conversion de puissance. En outre, les éléments de commutation du hacheur doivent être dimensionnés en fonction de la valeur maximale du courant.

Le but de l'invention est donc de pallier les inconvénients précités et de proposer un système de conversion de puissance capable d'éviter l'apparition de fluctuations de courant et ce, sans nécessiter de convertisseur supplémentaire.

L'invention a donc pour objet un système de conversion de puissance bidirectionnel pour charge électrique monophasée, telle que définie dans la revendication indépendante 1.

L'invention a également pour objet, selon un autre aspect, un procédé de conversion de puissance bidirectionnel entre une charge électrique monophasée et un bus d'alimentation continue délivrant une unique tension d'alimentation, telle que définie dans la revendication indépendante 8. Les modes de réalisation préférés sont définis dans les revendications dépendantes. L'invention est définie dans le jeu de revendications.

D'autres buts, caractéristiques et avantages de l'invention apparaîtront à la lecture de la description suivante, donnée uniquement à titre d'exemple non limitatif, et faite en référence aux dessins annexés sur lesquels :
- les figures 1a, 1b, 1c et 1d, dont il a déjà été fait mention, illustrent les problèmes d'apparition de fluctuations de courant en cas de différence de tension entre la sortie du convertisseur et la charge ;
- la figure 2 montre l'architecture générale d'un système de conversion de puissance conforme à l'invention ;
- les figures 3a et 3b sont des courbes montrant l'évolution des tensions dans le système de conversion de puissance ;
- la figure 4 illustre le fonctionnement d'un convertisseur ;
- les figures 5a et 5b sont des courbes montrant le pilotage des convertisseurs ;
- la figure 6 est un schéma de détail d'un système de conversion de puissance conforme à l'invention ;
- les figures 7, 8 et 9 montrent divers modes de couplage des convertisseurs ; et
- la figure 10 montre des courbes illustrant l'évolution des tensions de commande et de sortie et du courant circulant entre les convertisseurs de tension et la charge.

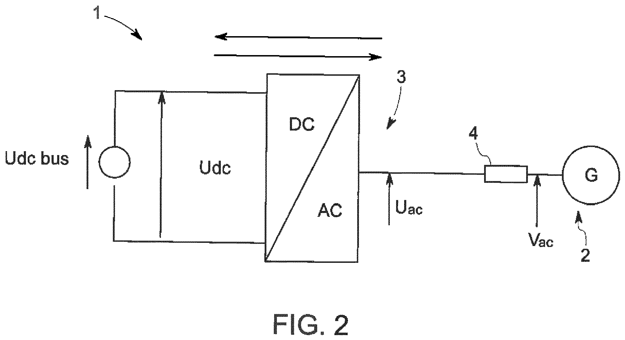

On se référera tout d'abord aux figures 2 à 4 qui illustrent l'architecture générale et le principe de fonctionnement d'un système de conversion de puissance selon l'invention, désigné par la référence numérique générale 1.

Ce système est destiné à assurer le transfert bidirectionnel de puissance entre un bus d'alimentation *Udc bus* délivrant une unique tension continue d'alimentation et une charge électrique monophasée.

Il peut par exemple s'agir d'assurer un transfert de puissance bidirectionnel vers un système de stockage d'énergie électrique ou à partir d'un tel système en fonction de la consommation ou de besoins d'équipements électriques.

Ainsi, la charge électrique 2 fonctionne soit en charge, soit en tant que générateur lorsqu'il s'agit de transférer de la puissance vers le bus.

Ce système comporte un étage de conversion de puissance 3 DC/AC. La tension entre les bornes de l'étage de conversion du côté continu est noté Udc. Du côté alternatif, la tension aux bornes de l'étage de conversion 3 est notée Uac. Comme on le voit, une inductance 4 est connectée entre l'étage de conversion 3 et la charge 2. Une telle inductance peut être constituée par l'inductance d'un transformateur de coulage ou une inductance de la charge elle-même. Par exemple, pour une machine électrique alternative, la tension notée Vac est la tension interne de la machine et l'inductance 4 peut être constituée par l'inductance de fuite de la machine.

La tension Vac interne à la charge, en aval de l'inductance 4 interne de la charge, est une tension alternative en créneau carrée, rectangulaire ou sensiblement rectangulaire, notamment trapézoïdale. Tel est également le cas de la tension Uac.

Le système fournit ainsi une tension de sortie Uac alternative dont l'amplitude varie, par exemple entre 10% et 100% de la tension disponible sur le bus continu Udc bus, et une tension de commande, dont la composante fondamentale est déphasée par rapport à la tension Vac de sorte que le transfert de puissance soit commandé en fonction du déphasage entre la tension Uac du convertisseur et la tension de la charge Vac.

Ainsi, par exemple, on procède à un stockage d'énergie ou, au contraire, à une fourniture d'énergie de la charge vers le convertisseur selon que le déphasage entre la tension du convertisseur et la tension de la charge est positif ou négatif.

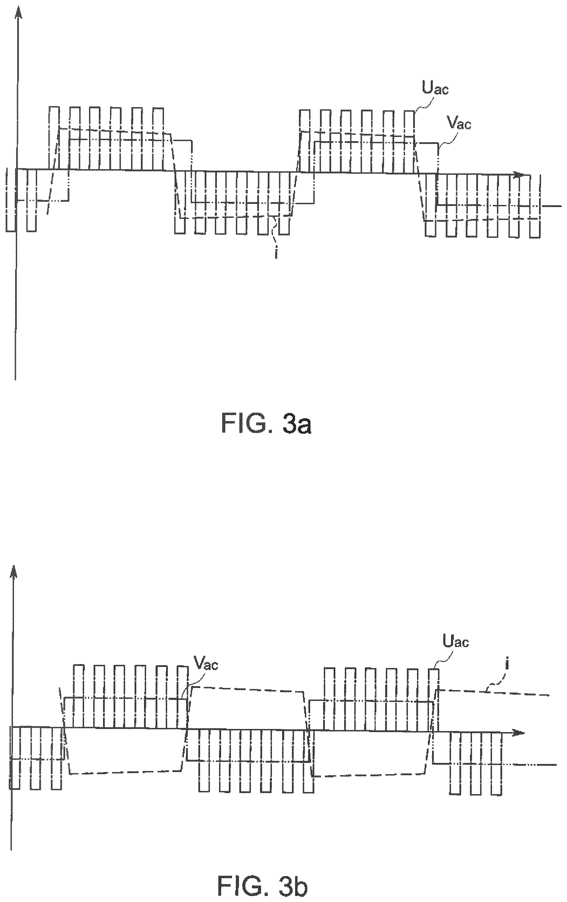

Toutefois, le convertisseur délivre une tension de commande Uac en créneau dont l'amplitude est commandée afin d'éviter les fluctuations dans le courant i circulant dans le système de conversion de puissance (figures 3a et 3b) quel que soit la tension de sortie.

L'étage de conversion de puissance est plus particulièrement commandé de manière à délivrer une tension de sortie Uac dont la valeur moyenne de l'amplitude des créneaux correspond à l'amplitude des créneaux de la tension de la charge Vac, à un rapport de transformation près, mais dont l'amplitude instantanée est déterminée de manière à éviter ces fluctuations de courant (figures 3a et 3b).

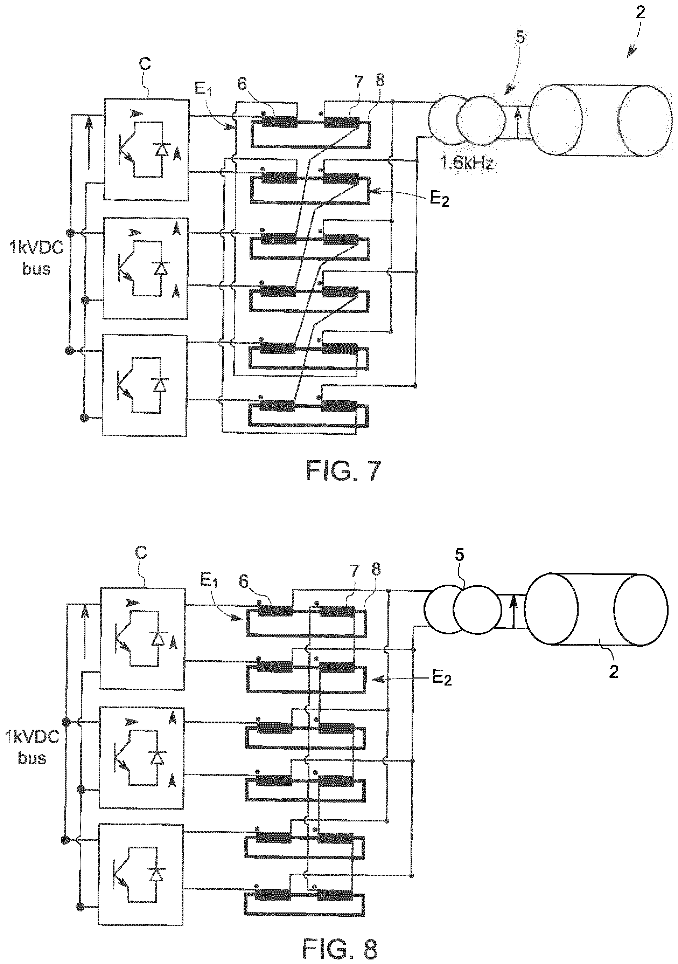

L'étage de conversion de puissance comporte un ensemble de convertisseurs entrelacés au moyen de circuits inductifs qui seront décrits par la suite en référence aux figures 7 à 9.

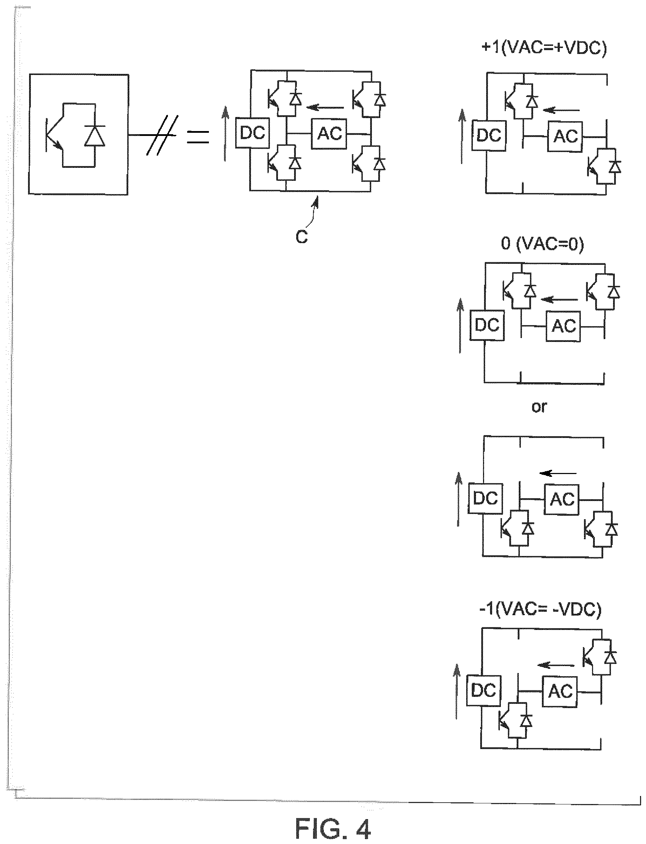

Comme le montre la figure 4, chaque convertisseur constitue un onduleur qui comporte un ensemble de cellules de commutation telles que C, comprenant un pont en H apte à délivrer trois niveaux de tension, selon l'état des cellules de commutation, à savoir « state+1 » (Uac=+Udc), « state 0 » (Uac=0) et « state-1 » (Uac=-Udc).

Les cellules de commutation sont commandées en modulation MLI par largeur d'impulsion.

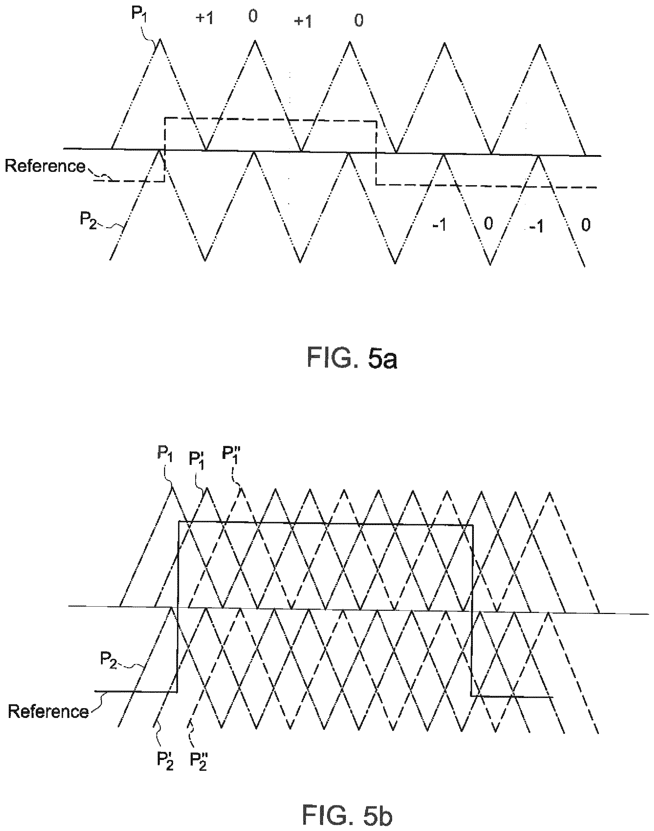

Par exemple, en référence à la figure 5a, chaque onduleur reçoit d'un circuit de commande une tension de référence commune en créneau Ref et deux signaux de commande P1 et P2 formés par des porteuses en dents de scie qui sont qui sont décalées l'une par rapport à l'autre pour obtenir une tension de sortie de type trois niveaux.

L'état passant ou non de chaque cellule de commutation est déterminé par l'intersection entre le signal de référence et les deux porteuses P1 et P2 en dents de scie.

En référence à la figure 5b, par exemple, lorsque l'on utilise trois convertisseurs, l'étage de conversion de puissance reçoit la tension de référence commune Ref et trois paires de signaux de commande en dents de scie P1, P2 ; P'1, P'2 et P"1, P"2. Ces dents de scie P1 P1' et P1", ainsi que les dents de scie P2 P2 ' P2" sont déphasées temporellement afin d'obtenir l'entrelacement entre les convertisseurs.

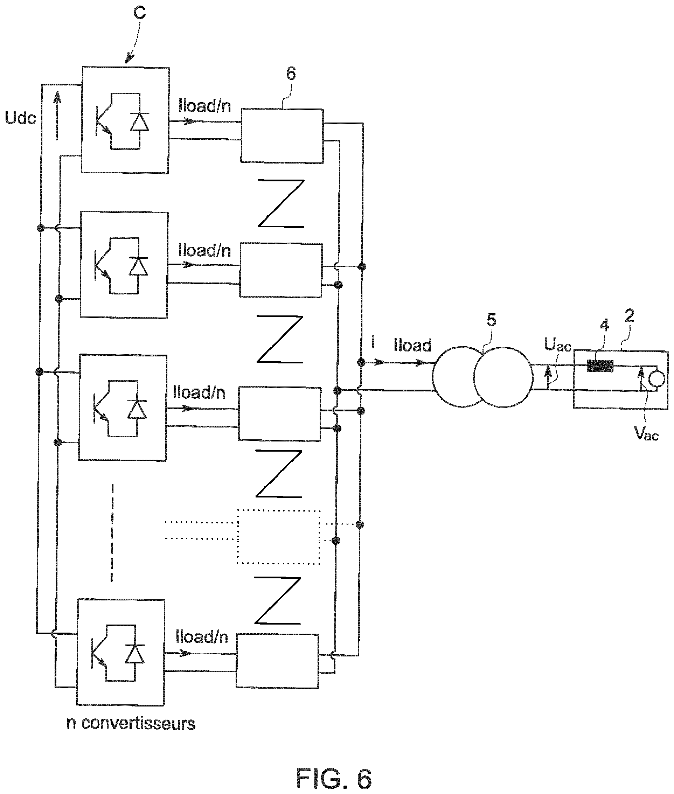

La sortie de chacun des convertisseurs est entrelacée au moyen de circuits inductifs tels que 4 (figure 6).

Dans un mode de réalisation, un transformateur 5 est interposé entre la charge 2 et la sortie des circuits inductifs 4. Ainsi, la sortie de l'étage de conversion est constituée par la somme des tensions fournies par les convertisseurs divisée par le nombre de convertisseurs, ce qui permet de lisser la tension de sortie et de réduire les fluctuations de courant.

En outre, la régulation de tension est plus rapide que pour un convertisseur unique.

On va maintenant décrire en référence aux figures 7 à 9 divers modes de couplage des convertisseurs 4.

Comme on le voit, les circuits inductifs assurant l'entrelacement de la sortie des convertisseurs comportent deux enroulements, tels que 6 et 7 qui sont bobinés autour d'un noyau 8. Le premier enroulement est raccordé à un convertisseur k et le second enroulement est raccordé à un convertisseur k+1 de sorte que le flux généré par les enroulements soit en direction opposée pour que le flux généré par le convertisseur k+1 annule le flux généré par le convertisseur k et de sorte que le flux s'annule si le courant délivré par le convertisseur k+1 est égal au courant fourni par le convertisseur k. Ainsi, pour la composante de sortie du courant, qui est délivrée à la charge, les circuits inductifs n'opposent qu'une inductance de faible valeur liée aux inductances de fuite des bobinages. Si les courants générés par les convertisseurs k et k+1 sont différents, alors les flux s'ajoutent. Il en résulte une inductance magnétisante importante qui va réduire les variations du courant, et notamment les circulations de courant entre convertisseurs liés à l'entrelacement.

Dans le mode de réalisation illustré à la figure 7, les convertisseurs sont entrelacés au moyen de circuits inductifs comprenant deux ensembles E1 et E2 de bobines appariées, correspondants respectivement à deux phases, de sorte que la première bobine 6 des premier et deuxième ensembles E1 et E2 soit raccordée d'une part à un convertisseur et d'autre part à la deuxième bobine 7 des premier et deuxième ensembles E1 et E2 de bobines et que les deuxièmes bobines 7 des circuits inductifs soient raccordées ensemble et soient par ailleurs raccordées à la première bobine des premier et deuxième ensembles E1 et E2 de bobines d'un autre convertisseur. Le transformateur 5 est ici raccordé entre les deuxièmes bobines des premier et deuxième ensembles de bobines.

Selon une variante visible sur la figure 8, les deuxièmes bobines 7 des circuits inductifs sont raccordées deux à deux et le transformateur 5 est branché entre les sorties communes du premier ensemble de bobines E1, d'une part et du deuxième ensemble de bobines E2, d'autre part.

Dans l'exemple de réalisation visible sur les figures 7 et 8, les bobines des premier et deuxième ensembles de bobines sont enroulées autour de noyaux distincts.

Il serait également possible, en variante, de les enrouler autour de noyaux communs disposant d'une troisième colonne permettant une libre circulation du flux magnétique.

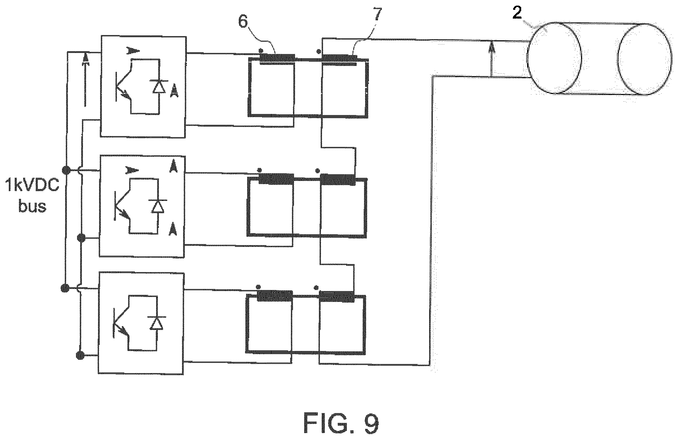

Selon un troisième mode de réalisation, visible sur la figure 9, les convertisseurs comportent chacun un circuit inductif comprenant une première bobine 6 et une deuxième bobine 7. La première bobine 6 est raccordée à la sortie du convertisseur correspondant, tandis que les autres bobines 7 sont raccordées deux à deux. Dans ce mode de réalisation, la charge est directement branchée au circuit inductif et plus particulièrement aux bornes de deux bobines 7.

Ce mode de réalisation est avantageux en ce qu'il permet de supprimer le transformateur 5 des modes de réalisation des figures 7 et 8.

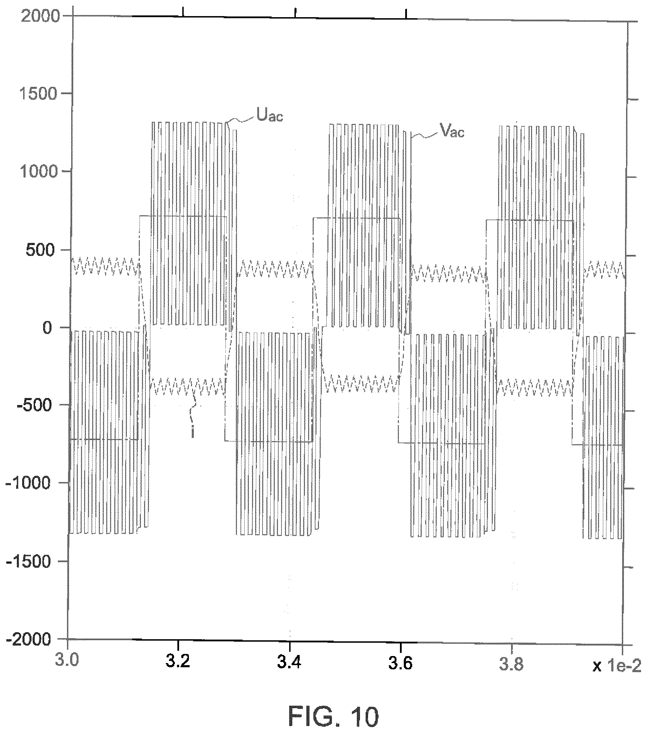

Comme on le voit enfin sur la figure 10, l'invention qui vient d'être décrite permet d'éviter l'apparition de fluctuations importantes dans le courant i circulant entre la charge et l'étage de conversion, seules subsistant des ondulations résiduelles d'amplitude négligeable.

## Revendications

1. Système de conversion de puissance bidirectionnel connectable à une charge électrique monophasée, ledit système de conversion étant adapté à être raccordé à un bus d'alimentation continue (Udc bus) délivrant une unique tension d'alimentation continue et adapté à délivrer à la charge une tension de sortie alternative sensiblement en forme de créneau, et comprenant un ensemble de convertisseurs (C) entrelacés, les convertisseurs comportant des circuits inductifs de raccordement des convertisseurs et des cellules de commutation, le système comprenant en outre un circuit de commande des convertisseurs apte à délivrer à chaque convertisseur une tension de référence commune (Ref) en créneau correspondant à la tension de sortie alternative (Uac) et un ensemble de signaux de commande en dents de scie déphasés destinés respectivement aux convertisseurs de sorte que l'état passant ou non de chaque cellule de commutation est déterminé par l'intersection entre le signal de référence et des signaux de commande, les convertisseurs sont adaptés à délivrer chacun une tension de sortie de convertisseur, la tension de sortie (Uac) du système de conversion de puissance étant égale à la somme des tensions fournies par les convertisseurs divisée par le nombre de convertisseurs, et que le système de conversion est adapté à fournir une tension de commande dont la composante fondamentale est déphasée par rapport à la tension interne de la charge (Vac), de sorte que le transfert de puissance est commandé en fonction du déphasage entre la tension de sortie (Uac) et la tension de la charge (Vac), et la dite tension de commande est adaptée à commander ce dit transfert de puissance des convertisseurs vers la charge ou de la charge vers les convertisseurs en fonction du signe de déphasage, de plus, le système de conversion est adapté à fournir la tension de sortie de chaque convertisseur étant élaborée à partir de la tension de référence commune (Ref) et d'un des signaux de commande de manière que la valeur moyenne de l'amplitude de la tension de sortie (Uac) du système de conversion corresponde à l'amplitude de la tension interne de la charge (Vac) et de manière que la valeur instantanée de la tension de sortie ait des amplitudes aptes à réduire les fluctuations d'un courant circulant entre les convertisseurs de tension et la charge, les circuits inductifs comprennent chacun un ensemble de bobines appariées comprenant une première bobine (6) raccordée à un premier convertisseur et une deuxième bobine (7) connectée à un autre convertisseur, les bobines étant enroulées en sens inverse autour d'un noyau magnétique (8) de sorte que les flux magnétiques engendrés par les bobines s'annulent lorsque les courants des convertisseurs sont égaux.

2. Système de conversion selon la revendication 1, dans lequel chaque convertisseur comprend un pont en H configuré pour délivrer trois niveaux de tension.

3. Système selon l'une des revendications 1 et 2, dans lequel les circuits inductifs comportent deux ensembles (E1, E2) de bobines appariées comprenant chacun une première bobine raccordée d'une part à un convertisseur et d'autre part à la deuxième bobine des premiers et deuxièmes ensembles de bobines appariées d'un autre convertisseur, et comprenant une deuxième bobine raccordée de sorte que la deuxième bobine d'un premier ensemble de bobines soit raccordée à la deuxième bobine du premier ensemble de bobines d'un autre convertisseur, un transformateur de sortie (5) étant raccordé à la deuxième bobine des premier et deuxième ensembles de bobines, et configuré pour élever ladite tension alternative.

4. Système selon l'une des revendications 1 et 2, dans lequel les circuits inductifs comportent, pour chaque convertisseur, deux ensembles (E1, E2) de bobines appariées comprenant chacun une première bobine raccordée audit convertisseur et une deuxième bobine raccordée de sorte que les deuxièmes bobines sont raccordées deux à deux, un transformateur de sortie (5) étant raccordé à la première bobine des premier et deuxième ensembles de bobines, et configuré fournir ladite tension alternative.

5. Système selon l'une des revendications 3 et 4, dans lequel les ensembles de bobines appariées sont bobinés sur des noyaux distincts.

6. Système selon l'une des revendications 3 et 4, dans lequel les bobines appariées sont bobinées sur un noyau commun disposant d'une troisième colonne de flux libre.

7. Système selon la revendication 1, dans lequel les circuits inductifs comportent, pour chaque convertisseur, une première bobine (6) raccordée audit convertisseur et une deuxième bobine (7) raccordée à une deuxième bobine d'un circuit inductif d'un autre convertisseur, la charge étant directement raccordé auxdits circuits inductifs.

8. Procédé de conversion de puissance bidirectionnel utilisant le système de conversion de puissance bidirectionnel tel que défini dans l'une des revendications précédentes, entre une charge électrique monophasée et un bus d'alimentation continue délivrant une unique tension continue, dans lequel on délivre à la charge une tension de sortie alternative (Uac) sensiblement en forme de créneau, on délivre à chaque convertisseur comprenant des cellules de commutation une tension de référence commune (Ref) en créneau correspondant à la tension de sortie alternative (Uac) et un ensemble de signaux de commande en dents de scie déphasés de sorte que l'état passant ou non de chaque cellule de commutation est déterminé par l'intersection entre le signal de référence et des signaux de commande, de plus on élabore une tension de commande dont le déphasage de sa composante fondamentale par rapport à une tension interne de la charge (Vac) commande le sens du transfert de puissance au moyen d'un ensemble de convertisseurs entrelacés, de sorte que le transfert de puissance est commandé en fonction du déphasage entre la tension de sortie (Uac) et la tension de la charge (Vac), et la dite tension de commande est adaptée à commander ce dit transfert de puissance des convertisseurs vers la charge ou de la charge vers les convertisseurs en fonction du signe de déphasage, chaque convertisseur délivrant la tension de sortie élaborée à partir de la tension de référence commune et d'un des signaux de commande de manière que la valeur moyenne de l'amplitude du créneau de tension de sortie corresponde à l'amplitude de la tension interne de la charge et de manière que ladite tension de sortie présente des amplitudes aptes à réduire les fluctuations dans le courant circulant entre les convertisseurs de tension et la charge, les convertisseurs comportant des circuits inductifs de raccordement des convertisseurs, les circuits inductifs comprennent chacun un ensemble de bobines appariées comprenant une première bobine (6) raccordée à un premier convertisseur et une deuxième bobine (7) connectée à un autre convertisseur, les bobines étant enroulées en sens inverse autour d'un noyau magnétique (8) de sorte que les flux magnétiques engendrés par les bobines s'annulent lorsque les courants des convertisseurs sont égaux.

## Patentansprüche

1. Bidirektionales Leistungswandlungssystem, das mit einer einphasigen elektrischen Ladung verbindbar ist, wobei das Wandlungssystem angepasst ist, um an einen Gleichspannungsversorgungsbus (Udc-Bus) angeschlossen zu werden, der eine eindeutige Versorgungsgleichspannung liefert und angepasst ist, um der Ladung eine Ausgangswechselspannung im Wesentlichen in Segmentform zu liefern, und eine Reihe von verflochtenen Wandlern (C) umfassend, wobei die Wandler Induktionsschaltkreise zum Anschließen der Wandler und der Schaltzellen beinhalten, wobei das System weiter einen Steuerungsschaltkreis für die Wandler umfasst, der imstande ist, jedem Wandler eine gemeinsame Segment-Referenzspannung (Ref), die der Ausgangswechselspannung (Uac) entspricht, und eine Reihe von phasenversetzten Sägezahn-Steuerungssignalen zu liefern, die jeweils für die Wandler bestimmt sind, sodass der leitende oder nicht leitende Zustand einer jeden Schaltzelle durch den Knotenpunkt zwischen dem Referenzsignal und den Steuerungssignalen bestimmt wird, die Wandler angepasst sind, jeweils eine Wandler-Ausgangsspannung zu liefern, die Ausgangsspannung (Uac) des Leistungswandlungssystems gleich der Summe der durch die Wandler bereitgestellten Spannungen geteilt durch die Anzahl an Wandlern ist, und das Wandlungssystem angepasst ist, eine Steuerungsspannung bereitzustellen, deren wesentlicher Bestandteil in Bezug auf die interne Spannung der Ladung (Vac) phasenversetzt ist, sodass der Leistungstransfer in Abhängigkeit von dem Phasenversatz zwischen der Ausgangsspannung (Uac) und der Spannung der Ladung (Vac) gesteuert wird, und Steuerungsspannung angepasst ist, um diesen Leistungstransfer der Wandler zur Ladung oder von der Ladung zu den Wandlern in Abhängigkeit von dem Phasenversatzvorzeichen zu steuern, das Wandlungssystem weiter angepasst ist, um die Ausgangsspannung von jedem Wandler bereitzustellen, die aus der gemeinsamen Referenzspannung (Ref) und einem der Steuerungssignale derart ausgearbeitet ist, dass der Mittelwert der Amplitude der Ausgangsspannung (Uac) des Wandlungssystems der Amplitude der internen Spannung der Ladung (Vac) entspricht, und derart, dass der momentane Wert der Ausgangsspannung Amplituden aufweist, die in der Lage sind, die Schwankungen eines Stroms, der zwischen den Spannungswandlern und der Ladung zirkuliert, zu verringern, wobei die Induktionsschaltkreise jeweils eine Reihe von gepaarten Spulen umfassen, die eine erste Spule (6) umfasst, die an einen ersten Wandler angeschlossen ist, und eine zweite Spule (7), die mit einem anderen Wandler verbunden ist, wobei die Spulen in entgegengesetzter Richtung um einen Magnetkern (8) herum gewickelt sind, sodass sich die durch die Spulen erzeugten Magnetflüsse aufheben, wenn die Ströme der Wandler gleich sind.

2. Wandlungssystem nach Anspruch 1, wobei jeder Wandler eine H-Brücke umfasst, die konfiguriert ist, um drei Spannungsstufen zu liefern.

3. System nach einem der Ansprüche 1 und 2, wobei die Induktionsschaltkreise zwei Einheiten (El, E2) von gepaarten Spulen beinhalten, die jeweils eine erste Spule, die einerseits an einen ersten Wandler, und andererseits an die zweite Spule der ersten und zweiten Einheit von gepaarten Spulen eines anderen Wandlers angeschlossen ist umfassen, und eine zweite Spule umfassen, die derart angeschlossen ist, dass die zweite Spule einer ersten Einheit von Spulen an die zweite Spule der ersten Einheit von Spulen eines anderen Wandlers angeschlossen ist, wobei ein Ausgangstransformator (5) an die zweite Spule der ersten und zweiten Einheit von Spulen angeschlossen ist, und konfiguriert ist, um die Wechselspannung zu erhöhen.

4. System nach einem der Ansprüche 1 und 2, wobei die Induktionsschaltkreise für jeden Wandler zwei Einheiten (El, E2) von gepaarten Spulen beinhalten, die jeweils eine erste Spule umfassen, die an den Wandler angeschlossen ist, und eine zweite Spule, die derart angeschlossen ist, dass die zweiten Spulen paarweise angeschlossen sind, wobei ein Ausgangstransformator (5) an die erste Spule der ersten und zweiten Einheit von Spulen angeschlossen ist, und konfiguriert ist, um die Wechselspannung bereitzustellen.

5. System nach einem der Ansprüche 3 und 4, wobei die Einheiten von gepaarten Spulen auf unterschiedliche Kerne gewickelt sind.

6. System nach einem der Ansprüche 3 und 4, wobei die gepaarten Spulen auf einen gemeinsamen Kern gewickelt sind, der über eine dritte Freiflusssäule verfügt.

7. System nach Anspruch 1, wobei die Induktionsschaltkreise für jeden Wandler eine erste Spule (6) beinhalten, die an den Wandler angeschlossen ist, und eine zweite Spule (7), die an eine zweite Spule eines Induktionsschaltkreises eines anderen Wandlers angeschlossen ist, wobei die Ladung direkt an die Induktionsschaltkreise angeschlossen ist.

8. Verfahren zur bidirektionalen Leistungswandlung, welches das bidirektionale Leistungswandlungssystem nach einem der vorstehenden Ansprüche, zwischen einer einphasigen elektrischen Ladung und einem Gleichspannungsversorgungsbus verwendet, der eine eindeutige Gleichspannung liefert, wobei der Ladung eine Ausgangswechselspannung (Uac) im Wesentlichen in Segmentform geliefert wird, jedem Wandler, der Schaltzellen beinhaltet, eine gemeinsame Segment-Referenzspannung (Ref), die der Ausgangswechselspannung (Uac) entspricht, und eine Reihe von phasenversetzten Sägezahn-Steuerungssignalen geliefert werden, sodass der leitende oder nicht leitende Zustand einer jeden Schaltzelle durch den Knotenpunkt zwischen dem Referenzsignal und den Steuerungssignalen bestimmt wird, weiter eine Steuerungsspannung ausgearbeitet wird, deren Phasenversatz ihres wesentlichen Bestandteils in Bezug auf die interne Spannung der Ladung (Vac) die Richtung des Leistungstransfers anhand einer Reihe von verflochtenen Wandlern steuert, sodass der Leistungstransfer in Abhängigkeit von dem Phasenversatz zwischen der Ausgangsspannung (Uac) und der Spannung der Ladung (Vac) gesteuert wird, und Steuerungsspannung angepasst ist, um diesen Leistungstransfer der Wandler zur Ladung oder von der Ladung zu den Wandlern in Abhängigkeit von dem Phasenversatzvorzeichen zu steuern, wobei jeder Wandler die ausgearbeitete Ausgangsspannung aus der gemeinsamen Referenzspannung und einem der Steuerungssignale liefert, sodass der Mittelwert der Amplitude des Ausgangsspannungssegments der Amplitude der internen Spannung der Ladung entspricht, und derart, dass die Ausgangsspannung Amplituden aufweist, die in der Lage sind, die Schwankungen in dem Strom, der zwischen den Spannungswandlern und der Ladung zirkuliert, zu verringern, wobei die Wandler Induktionsschaltkreise zum Anschließen der Wandler beinhalten, wobei die Induktionsschaltkreise jeweils eine Reihe von gepaarten Spulen umfassen, die eine erste Spule (6) umfasst, die an einen ersten Wandler angeschlossen ist, und eine zweite Spule (7), die mit einem anderen Wandler verbunden ist, wobei die Spulen in entgegengesetzter Richtung um einen Magnetkern (8) herum gewickelt sind, sodass sich die durch die Spulen erzeugten Magnetflüsse aufheben, wenn die Ströme der Wandler gleich sind.

## Claims

1. A bidirectional power conversion system connectable to a single-phase electrical load, said conversion system being adapted to be connected to a continuous supply bus (Udc bus) outputting a unique continuous supply voltage and adapted to output to the load a substantially slot-shaped alternating output voltage, and comprising a set of interleaved converters (C), the converters including inductive circuits for connecting the converters and the switching cells, the system further comprising a circuit for controlling the converters adapted to output to each converter a slot-shaped common reference voltage (Ref) corresponding to the alternating output voltage (Uac) and a set of phase-shifted sawtooth-shaped control signals intended respectively to the output converters so that the on-state or off-state of each switching cell is determined by the intersection between the reference signal and control signals, each of the converters is adapted to output a converter output voltage, the output voltage (Uac) of the power conversion system being equal to the sum of the voltages supplied by the converters divided by the number of converters, and the conversion system is adapted to supply a control voltage whose fundamental component is phase-shifted with respect to the internal voltage of the load (Vac), so that the power transfer is controlled according to the phase-shift between the output voltage (Uac) and the voltage of the load (Vac), and said control voltage is adapted to control this said power transfer from the converters towards the load or from the load towards the converters according to the phase-shift sign, in addition, the conversion system is adapted to supply the output voltage of each converter being created from the common reference voltage (Ref) and from one of the control signals so that the average value of the amplitude of the output voltage (Uac) of the conversion system corresponds to the amplitude of the internal voltage of the load (Vac) and so that the instantaneous value of the output voltage has amplitudes adapted to reduce the fluctuations of a current circulating between the voltage converters and the load, each of the inductive circuits comprises a set of coupled coils comprising a first coil (6) connected to a first converter and a second coil (7) connected to another converter, the coils being wound in opposite directions around a magnetic core (8) so that the magnetic fluxes generated by the coils cancel each other when the currents of the converters are equal.

2. The conversion system according to claim 1, wherein each converter comprises a H-bridge configured to output three voltage levels.

3. The system according to one of claims 1 and 2, wherein the inductive circuits include two sets (El, E2) of coupled coils each comprising a first coil connected, on the one hand, to a converter and, on the other hand, to the second coil of the first and second sets of coupled coils of another converter, and comprising a second coil connected so that the second coil of a first set of coils is connected to the second coil of the first set of coils of another converter, an output transformer (5) being connected to the second coil of the first and second sets of coils, and configured to raise said alternating voltage.

4. The system according to one of claims 1 and 2, wherein the inductive circuits include, for each converter, two sets (El, E2) of coupled coils each comprising a first coil connected to said converter and a second coil connected so that the second coils are connected in pairs, an output transformer (5) being connected to the first coil of the first and second sets of coils, and configured to supply said alternating voltage.

5. The system according to one of claims 3 and 4, wherein the sets of coupled coils are coiled on distinct cores.

6. The system according to one of claims 3 and 4, wherein the coupled coils are coiled on a common core provided with a third free flux column.

7. The system according to claim 1, wherein the inductive circuits include, for each converter, a first coil (6) connected to said converter and a second coil (7) connected to a second coil of an inductive circuit of another converter, the load being directly connected to said inductive circuits.

8. A bidirectional power conversion method using the bidirectional power conversion system as defined in one of the preceding claims, between a single-phase electrical load and a continuous supply bus outputting a unique continuous voltage, wherein a substantially slot-shaped alternating output voltage (Uac) is output to the load, a slot-shaped common reference voltage (Ref) corresponding to the alternating output voltage (Uac) and a set of phase-shifted sawtooth-shaped control signals are output to each converter comprising switching cells so that the on-state or off-state of each switching cell is determined by the intersection between the reference signal and control signals, in addition a control voltage wherein the phase-shift of its fundamental component with respect to an internal voltage of the load (Vac) controls the direction of power transfer is created by means of a set of interleaved converters, so that the power transfer is controlled according to the phase-shift between the output voltage (Uac) and the voltage of the load (Vac), and said control voltage is adapted to control this said power transfer from the converters towards the load or from the load towards the converters according to the phase-shift sign, each converter outputting the output voltage created from the common reference voltage and from one of the control signals so that the average value of the amplitude of the output voltage slot corresponds to the amplitude of the internal voltage of the load and so that said output voltage has amplitudes adapted to reduce the fluctuations in the current circulating between the voltage converters and the load, the converters including inductive circuits for connecting the converters, each of the inductive circuits comprises a set of coupled coils comprising a first coil (6) connected to a first converter and a second coil (7) connected to another converter, the coils being wound in opposite directions around a magnetic core (8) so that the magnetic fluxes generated by the coils cancel each other when the currents of the converters are equal.
